(19) Europäisches Patentamt
European Patent Office
Office européen des brevets

(11) EP 3 444 286 B1

(12) EUROPEAN PATENT SPECIFICATION

(45) Date of publication and mention of the grant of the patent:
**11.01.2023 Bulletin 2023/02**

(21) Application number: **17767979.2**

(22) Date of filing: **16.02.2017**

(51) International Patent Classification (IPC):
***C08G 18/00*** *(2006.01)* ***C08G 18/08*** *(2006.01)*
***C08G 18/40*** *(2006.01)* ***C08G 18/61*** *(2006.01)*
***D06N 3/14*** *(2006.01)* ***C08G 18/28*** *(2006.01)*
***C08G 18/12*** *(2006.01)* ***C08G 18/24*** *(2006.01)*
***C08G 18/75*** *(2006.01)* ***C08G 18/34*** *(2006.01)*
***C08G 18/32*** *(2006.01)* ***C08G 18/44*** *(2006.01)*
***C08G 18/48*** *(2006.01)* ***C08G 18/73*** *(2006.01)*
***C08G 18/66*** *(2006.01)* ***D06N 3/00*** *(2006.01)*
***D06N 3/12*** *(2006.01)*

(52) Cooperative Patent Classification (CPC):
(C-Sets available)
**C08G 18/61; C08G 18/0823; C08G 18/12; C08G 18/246; C08G 18/289; C08G 18/3228; C08G 18/348; C08G 18/4018; C08G 18/44; C08G 18/4854; C08G 18/6659; C08G 18/6692; C08G 18/73; C08G 18/755; C08G 18/758;** (Cont.)

(86) International application number:
**PCT/JP2017/005660**

(87) International publication number:
**WO 2017/179291 (19.10.2017 Gazette 2017/42)**

(54) **WATER-BASED URETHANE RESIN COMPOSITION AND SYNTHETIC LEATHER**

WASSERBASIERTE URETHANHARZZUSAMMENSETZUNG UND KUNSTLEDER

COMPOSITION DE RÉSINE D'URÉTHANE À BASE D'EAU ET CUIR SYNTHÉTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.04.2016 JP 2016081164**

(43) Date of publication of application:
**20.02.2019 Bulletin 2019/08**

(73) Proprietor: **DIC Corporation**
**Tokyo 174-8520 (JP)**

(72) Inventor: **MAEDA, Ryo**
**Takaishi-shi**
**Osaka 592-0001 (JP)**

(74) Representative: **TBK**
**Bavariaring 4-6**
**80336 München (DE)**

(56) References cited:
**EP-A1- 1 739 224**
**WO-A1-2013/096048**
**CN-A- 104 844 778**
**JP-A- H04 209 679**
**JP-A- H11 302 354**
**JP-A- 2007 092 195**
**JP-A- 2007 092 195**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
**D06N 3/0065; D06N 3/0095; D06N 3/128;**
**D06N 3/145;** D06N 2209/105; D06N 2209/143;
D06N 2211/106; D06N 2211/14

C-Sets
**C08G 18/12, C08G 18/3228;**
**C08G 18/12, C08G 18/3234;**
**C08G 18/12, C08G 18/3246**

## Description

### Technical Field

The present invention relates to an aqueous urethane resin composition excellent in wear resistance and hydrolysis resistance.

### Background Art

Solvent-based urethane resins, mainly N,N-dimethylformamide (DMF)-based urethane resins, had been widely used as urethane resins for synthetic leather. However, against the backdrop of tightening DMF controls in Europe and tightening VOC emission controls in China and Taiwan, elimination of DMF usage is in progress.

To eliminate DMF usage, substitution of environmentresponsive aqueous urethane resins for the solvent-based urethane resins is proceeding (see, for example, PTL 1). However, the wear resistance and hydrolysis resistance of the current aqueous urethane resins are still insufficient.

### Citation List

### Patent Literature

PTL 1: Japanese Unexamined Patent Application Publication No. 2007-119749

CN104844778 A relates to a polyurethane dispersion, which comprises, by weight, 1-8 parts gammaaminopropyltriethoxysilane modified four-needle zinc oxide, 100 parts polyester polyol, 13-91 parts diisocyanate, 10-25 parts amino silicone oil, 0-0.5 part organo-metallic catalyst, 8-16 parts polyhydroxy carboxylic acid, 0.3-10 parts cross-linking agents, 6.2-18 parts neutralizing agents, 1-8 parts chain extenders and 0.2-2.0 parts defoaming agents.

WO2013/096048 A1 relates to pigment-based ink composition, wherein the ink contains an aqueous polyurethane additive including polyurethane polymer chains including at least first segments having a polysiloxane group of Mw greater than 10000 pendant to the polyurethane polymer chain backbone.

JP 2007-092195 A relates to an aqueous resin composition for a fiber laminate skin layer, which is obtained by reacting an organic polyisocyanate with a polycarbonate polyol, a carboxy group-containing diol, a chain extender and a polysiloxane polyol containing two or more hydroxy groups to be reacted with isocyanate groups at the side chain to give a urethane prepolymer and emulsifying the urethane prepolymer into water in the presence of a neutralizer and an anionic surfactant.

EP1739224 A1 relates to a sheet comprising a non-woven fabric in which ultra-fine fibers of a single fiber thickness of 0.5 dtex or less are entangled and an elastomeric binder mainly composed of a polyurethane, wherein said polyurethane is a polycarbonate-based polyurethane having a specific polycarbonate skeleton.

### Summary of Invention

### Technical Problem

An object of the present invention is to provide an aqueous urethane resin composition excellent in wear resistance and hydrolysis resistance.

### Solution to Problem

The present invention provides an aqueous urethane resin composition comprising: a urethane resin (A) that is a reaction product of essential ingredients including a polyol (a1) selected from polyether polyol and/or a polycarbonate polyol, a reactive silicone (a2) having a number average molecular weight of 4,000 or more and having a functional group reactive with an isocyanate group, a polyisocyanate (a3), and one or more chain extenders selected from the group consisting of ethylenediamine, isophoronediamine, and piperazine; and an aqueous medium (B).

The present invention also provides a synthetic leather comprising a skin layer formed from the aqueous urethane resin composition and/or a surface-treated layer formed from the aqueous urethane resin composition.

### Advantageous Effects of Invention

The aqueous urethane resin composition of the present invention is excellent in wear resistance and hydrolysis resistance. Therefore, the aqueous urethane resin composition of the present invention can be preferably used for a

skin layer and a surface-treated layer of a synthetic leather and can be preferably used for production of synthetic leathers that are required to have high wear resistance and high hydrolysis resistance and used for automobile interior materials, furnishings, sports shoes, etc. which are difficult to produce using conventional aqueous urethane resins as the substitutes.

Description of Embodiments

The aqueous urethane resin composition of the present invention comprises: a urethane resin (A) that is a reaction product of essential ingredients including
a polyol (a1) selected from polyether polyol and/or a polycarbonate polyol, a reactive silicone (a2) having a number average molecular weight of 4,000 or more and having a functional group reactive with an isocyanate group, a polyisocyanate (a3), and one or more chain extenders selected from the group consisting of ethylenediamine, isophoronediamine, and piperazine; and an aqueous medium (B) .

The urethane resin (A) is dispersible in the aqueous medium (B) described later. For example, the urethane resin (A) used may be: a urethane resin having a hydrophilic group such as an anionic group, a cationic group, or a nonionic group; a urethane resin forcibly dispersed in the aqueous medium (B) using an emulsifier; etc. These urethane resins (A) may be used alone or in combination of two or more. In terms of production stability, it is preferable to use a urethane resin having a hydrophilic group. It is more preferable to use a urethane resin having an anionic group because higher wear resistance and hydrolysis resistance can be obtained.

Examples of the method for obtaining the urethane resin having an anionic group include a method using, as a raw material, at least one compound selected from the group consisting of glycol compounds having a carboxyl group and compounds having a sulfonyl group.

Examples of usable glycol compounds having a carboxyl group include 2,2-dimethylolpropionic acid, 2,2-dimethylolbutanoic acid, 2,2-dimethylolbutyric acid, 2,2-dimethylolpropionic acid, and 2,2'-valeric acid. These compounds may be used alone or in combination of two or more.

Examples of usable compounds having a sulfonyl group include 3,4-diaminobutanesulfonic acid, 3,6-diamino-2-toluenesulfonic acid, 2,6-diaminobenzenesulfonic acid, and N-(2-aminoethyl)-2-aminoethylsulfonic acid. These compounds may be used alone or in combination of two or more.

In the aqueous urethane resin composition, part or all of the carboxyl groups and the sulfonyl groups may be neutralized with a basic compound. Examples of the basic compound that can be used include: organic amines such as ammonia, triethylamine, pyridine, and morpholine; alkanolamines such as monoethanolamine and dimethylethanolamine; and metal basic compounds containing sodium, potassium, lithium, calcium, etc.

The hydrophilic groups facilitate hydrolysis.
Therefore, when the urethane resin (A) used is a urethane resin having an anionic group (hereinafter abbreviated as an "anionic urethane resin"), the acid value of the anionic urethane resin is preferably 20 mg KOH/g or less, more preferably within the range of 3 to 17 mg KOH/g, still more preferably within the range of 5 to 14 mg KOH/g, and particularly preferably within the range of 5 to 13 mg KOH/g, because higher hydrolysis resistance is obtained.
The method for measuring the acid value of the anionic urethane resin will be described later in EXAMPLES. Examples of the method for controlling the acid value of the anionic urethane resin include a method in which the amount used of the glycol compound having a carboxyl group and the compound having a sulfonyl group that provide anionic groups is controlled.

From the viewpoint that higher hydrolysis resistance is obtained, the amount used of the glycol compound having a carboxyl group and the compound having a sulfonyl group is preferably within the range of 0.1 to 5% by mass, more preferably within the range of 0.3 to 4% by mass, and still more preferably 0.5 to 3.5% by mass based on the total mass of the raw materials forming the urethane resin (A).

Examples of the method for obtaining the urethane resin having a cationic group include a method using one or two or more compounds having an amino group as raw materials.

Examples of usable compounds having an amino group include: compounds having a primary or secondary amino group such as triethylenetetramine and diethylenetriamine; and compounds having a tertiary amino group that include N-alkyldialkanolamines such as N-methyldiethanolamine and N-ethyldiethanolamine, N-alkyldiaminoalkylamines such as N-methyldiaminoethylamine and N-ethyldiaminoethylamine, etc. These compounds may be used alone or in combination of two or more.

Examples of the method for obtaining the urethane resin having a nonionic group include a method using one or two or more compounds having an oxyethylene structure as raw materials.

Examples of usable compounds having an oxyethylene structure include polyether polyols having an oxyethylene structure such as polyoxyethylene glycol, polyoxyethylene polyoxypropylene glycol, and polyoxyethylene polyoxytetramethylene glycol. These compounds may be used alone or in combination of two or more.

Examples of the emulsifier that can be used to obtain the urethane resin forcibly dispersed in the aqueous

medium (B) include: nonionic emulsifiers such as polyoxyethylene nonylphenyl ether, polyoxyethylene lauryl ether, polyoxyethylene styrylphenyl ether, polyoxyethylene sorbitol tetraoleate, and polyoxyethylene-polyoxypropylene copolymers; anionic emulsifiers such as fatty acid salts including sodium oleate etc., alkyl sulfates, alkyl benzenesulfonates, alkyl sulfosuccinates, naphthalene sulfonates, polyoxyethylene alkyl sulfates, sodium alkane sulfonates, and sodium alkyl diphenyl ether sulfonates; and cationic emulsifiers such as alkyl amine salts, alkyl trimethyl ammonium salts, and alkyl dimethyl benzyl ammonium salts. These emulsifiers may be used alone or in combination of two or more.

Specifically, the urethane resin (A) is a reaction product of the polyol (a1), the raw material for producing a urethane resin having a hydrophilic group, the reactive silicone (a2) having a number average molecular weight of 4,000 or more and having a functional group reactive with an isocyanate group, and the polyisocyanate (a3).

From the viewpoint that higher wear resistance and higher hydrolysis resistance are obtained, the polyol (a1) used is a polyether polyol and/or a polycarbonate polyol and more preferably a polytetramethylene glycol and/or a polycarbonate polyol. For the same reason, the polycarbonate polyol used is preferably a polycarbonate polyol prepared using 1,6-hexanediol and/or 1,4-butanediol as a raw material and more preferably a polycarbonate polyol prepared using 1,6-hexanediol and 1,4-butanediol as raw materials. When the urethane resin (A) is a urethane resin having a nonionic group, the polyol (a1) used is a polyol other than the compound having an oxyethylene structure.

In terms of the mechanical strength of a coating to be obtained, the number average molecular weight of the polyol (a1) is preferably within the range of 500 to 8,000 and more preferably within the range of 800 to 5,000. The number average molecular weight of the polyol (a1) is a value measured and obtained by gel permeation column chromatography (GPC) under the following conditions.

Measurement device: High performance GPC ("HLC-8220GPC" manufactured by TOSOH Corporation)
Columns: The following columns manufactured by TOSOH Corporation are connected in series and used.
"TSKgel G5000" (7.8 mm I.D. × 30 cm) × 1
"TSKgel G4000" (7.8 mm I.D. × 30 cm) × 1
"TSKgel G3000" (7.8 mm I.D. × 30 cm) × 1
"TSKgel G2000" (7.8 mm I.D. × 30 cm) × 1
Detector: RI (differential refractometer)
Column temperature: 40°C
Eluent: tetrahydrofuran (THF)
Flow rate: 1.0 mL/minute
Injection amount: 100 μL (tetrahydrofuran solution with a sample concentration of 0.4% by mass)
Standard samples: The following polystyrene standards are used to produce a calibration curve.

(Polystyrene standards)

"TSKgel standard polystyrene A-500" manufactured by TOSOH Corporation
"TSKgel standard polystyrene A-1000" manufactured by TOSOH Corporation
"TSKgel standard polystyrene A-2500" manufactured by TOSOH Corporation
"TSKgel standard polystyrene A-5000" manufactured by TOSOH Corporation
"TSKgel standard polystyrene F-1" manufactured by TOSOH Corporation
"TSKgel standard polystyrene F-2" manufactured by TOSOH Corporation
"TSKgel standard polystyrene F-4" manufactured by TOSOH Corporation
"TSKgel standard polystyrene F-10" manufactured by TOSOH Corporation
"TSKgel standard polystyrene F-20" manufactured by TOSOH Corporation
"TSKgel standard polystyrene F-40" manufactured by TOSOH Corporation
"TSKgel standard polystyrene F-80" manufactured by TOSOH Corporation
"TSKgel standard polystyrene F-128" manufactured by TOSOH Corporation
"TSKgel standard polystyrene F-288" manufactured by TOSOH Corporation
"TSKgel standard polystyrene F-550" manufactured by TOSOH Corporation

In terms of the mechanical strength of the coating, the amount of the polyol (a1) used is preferably within the range of 40 to 90% by mass, more preferably within the range of 45 to 88% by mass, and still more preferably within the range of 50 to 85% by mass based on the total mass of the raw materials forming the urethane resin (A).

If necessary, a chain extender (a1-1) having a number average molecular weight within the range of 50 to 450 may be used in combination with the polyol (a1). The number average molecular weight of the chain extender (a1-1) is a value measured and obtained in the same manner as that for the number average molecular weight of the polyol (a1).

In general, chain extender include: chain extenders having a hydroxyl group such as ethylene glycol, diethylene glycol, triethylene glycol, propylene glycol, dipropylene glycol, 1,3-propanediol, 1,3-butanediol, 1,4-butanediol, hexamethylene glycol, saccharose, methylene glycol, glycerin, sorbitol, bisphenol A, 4,4'-dihydroxydiphenyl, 4,4'-dihydroxydiphenyl ether, and trimethylolpropane; and chain extenders having an amino group such as ethylenediamine, 1,2-propanediamine, 1,6-hexamethylenediamine, piperazine, 2,5-dimethylpiperazine, isophoronediamine, 1,2-cyclohexanediamine, 1,3-cyclohexanediamine, 1,4-cyclohexanediamine, 4,4'-dicyclohexylmethanediamine, 3,3'-dimethyl-4,4'-dicyclohexylmethanediamine, 1,4-cyclohexanediamine, and hydrazine. In the present invention, chain extenders having an amino group are used because of their durability such as hydrolysis resistance and heat resistance, and specifically at least one selected from the group consisting of ethylenediamine, isophoronediamine, and piperazine is used.

The amount of the chain extender (a1-1) used is preferably within the range of 0.1 to 10% by mass, more preferably within the range of 0.5 to 7% by mass, and still more preferably 0.8 to 5% by mass based on the total mass of the raw materials forming the urethane resin (A), in terms of durability such as hydrolysis resistance and heat resistance

The reactive silicone (a2) used is incorporated into the urethane resin (A) and must have a functional group reactive with an isocyanate group and have a number average molecular weight of 4,000 or more in order to obtain high wear resistance and high hydrolysis resistance. By introducing such a reactive silicone (a2) having a relatively high molecular weight, very high slidability is imparted, so that high wear resistance and high hydrolysis resistance can be obtained. The number average molecular weight of the reactive silicone (a2) is preferably within the range of 4,500 to 50,000, more preferably within the range of 4,700 to 30,000, and still more preferably 5,000 to 20,000 because higher wear resistance and higher hydrolysis resistance are obtained. The number average molecular weight of the reactive silicone (a2) is a value measured and obtained by the same method as that for the polyol (a1).

Examples of the reactive silicone (a2) that can be used include: one-end diol-terminated reactive silicones, one-end monol-terminated reactive silicones, one-end diamine-terminated reactive silicones, and one-end monoamineterminated reactive silicones that are represented by formula (1) below; both-end diol-terminated reactive silicones, both-end diamine-terminated reactive silicones, both-end dimercapto-terminated reactive silicones, and both-end disilanol-terminated reactive silicones that are represented by formula (2) below; and side-chain monoaminetype reactive silicones represented by formula (3) below. These reactive silicones may be used alone or in combination of two or more.

[Chem. 1]

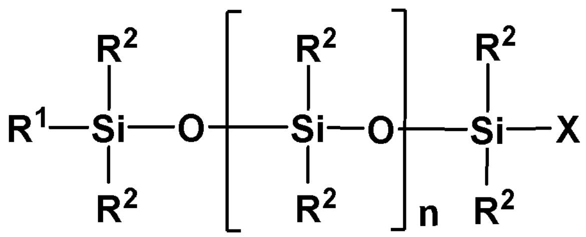

(1)

(In formula (1), $R^1$ and $R^2$ each independently represent an alkyl group having 1 to 10 carbon atoms; X represents one of structures represented by formulas (X-1) to (X-12) below; and n represents an integer in the range of 50 to 670.)

[Chem. 2]

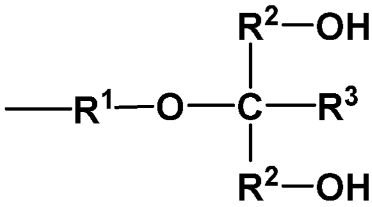 (X-1)

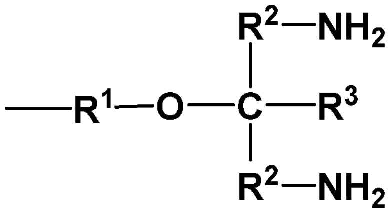 (X-2)

(In formulas (X-1) and (X-2), $R^1$ and $R^2$ each independently represent an alkylene group having 1 to 10 carbon atoms, and $R^3$ represents a hydrogen atom or an alkyl group having 1 to 8 carbon atoms.)

[Chem. 3]

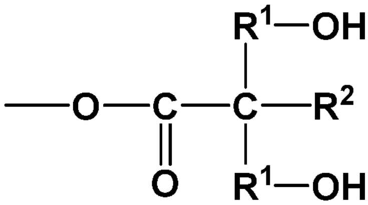 (X-3)

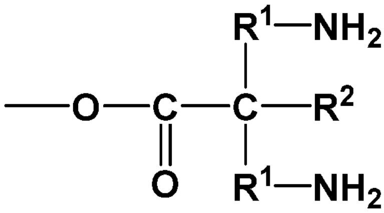 (X-4)

(In formulas (X-3) and (X-4), $R^1$ represents an alkylene group having 1 to 10 carbon atoms, and $R^2$ represents a hydrogen atom or an alkyl group having 1 to 8 carbon atoms.)

[Chem. 4]

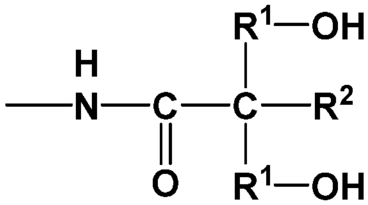 (X-5)

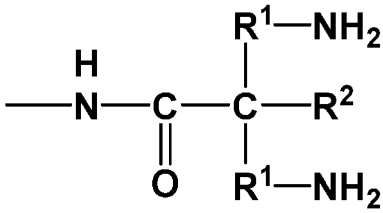 (X-6)

(In formulas (X-5) and (X-6), $R^1$ represents an alkylene group having 1 to 10 carbon atoms, and $R^2$ represents a hydrogen atom or an alkyl group having 1 to 8 carbon atoms.)

[Chem. 5]

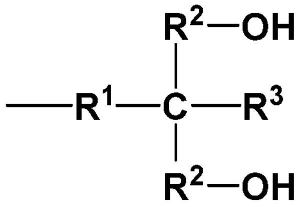
(X-7)

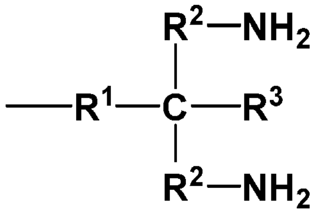
(X-8)

(In formulas (X-7) and (X-8), $R^1$ and $R^2$ each independently represent an alkylene group having 1 to 10 carbon atoms, and $R^3$ represents a hydrogen atom or an alkyl group having 1 to 8 carbon atoms.)

[Chem. 6]

$$—R^1—O—R^2—OH \quad (X\text{-}9)$$

$$—R^1—O—R^2—NH_2 \quad (X\text{-}10)$$

(In formulas (X-9) and (X-10), $R^1$ and $R^2$ each independently represent an alkylene group having 1 to 10 carbon atoms.)

[Chem. 7]

$$—R^1—OH \quad (X\text{-}11)$$

$$—R^1—NH_2 \quad (X\text{-}12)$$

(In formulas (X-11) and (X-12), $R^1$ represents an alkylene group having 1 to 10 carbon atoms.)

[Chem. 8]

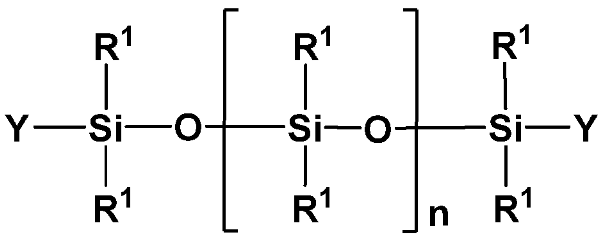
(2)

(In formula (2), $R^1$ represents an alkyl group having 1 to 10 carbon atoms; Y represents one of structures represented by formulas (Y-1) to (Y-5) below; and n represents an integer in the range of 50 to 670.)

[Chem. 9]

$$-OH \quad (Y\text{-}1)$$

[Chem. 10]

$$-R^1-OH \quad (Y\text{-}2)$$

$$-R^1-NH_2 \quad (Y\text{-}3)$$

$$-R^1-SH \quad (Y\text{-}4)$$

(In formulas (Y-2) to (Y-4), $R^1$ represents an alkylene group having 1 to 10 carbon atoms.)

[Chem. 11]

$$-R^1-O-R^2-OH \quad (Y\text{-}5)$$

(In formula (Y-5), $R^1$ and $R^2$ each independently represent an alkylene group having 1 to 10 carbon atoms.)

[Chem. 12]

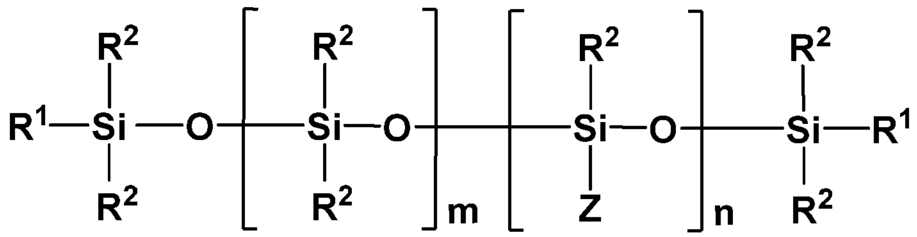

(3)

(In formula (3), $R^1$ and $R^2$ each independently represent an alkyl group having 1 to 8 carbon atoms; Z represents one of structures represented by formulas (Z-1) to (Z-2) below; m represents an integer in the range of 50 to 670; and n represents an integer in the range of 1 to 10.)

[Chem. 13]

$$-R^1-NH_2 \quad (Z\text{-}1)$$

(In formula (Z-1), $R^1$ represents an alkylene group having 1 to 10 carbon atoms.)

[Chem. 14]

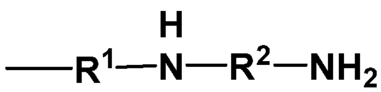

(Z-2)

(In formula (Z-2), $R^1$ and $R^2$ each independently represent an alkylene group having 1 to 10 carbon atoms.)

As the reactive silicone (a2), commercial products are available, such as "Silaplane FM-3321," "Silaplane FM-3325," "Silaplane FM-4421," "Silaplane FM-4425," "Silaplane FM-0421," "Silaplane FM-0425," "Silaplane FM-DA21,"

and "Silaplane FM-DA26" that are manufactured by JNC Corporation and "X-22-176GX-A" and "X-22-176F" that are manufactured by Shin-Etsu Chemical Co., Ltd.

The reactive silicone (a2) used is preferably a reactive silicone represented by formula (1) above, more preferably a reactive silicone represented by formula (1) above in which X is at least one selected from the group consisting of formulas (X-1), (X-7), and (X-9) above, and still more preferably a reactive silicone represented by formula (1) above in which X represents formula (X-1) and/or formula (X-7), because since a silicone chain is introduced into a side chain of the urethane resin (A), higher slidability is imparted and higher wear resistance and higher hydrolysis resistance are obtained. Preferably, in the reactive silicone used, $R^1$ and $R^2$ in formula (1) above are each an alkyl group having 1 to 3 carbon atoms; n is an integer in the range of 50 to 270; $R^1$ and $R^2$ in each of formulas (X-1) and (X-7) above are each an alkylene group having 1 to 3 carbon atoms; and $R^3$ in each of formulas (X-1) and (X-7) above represents an alkyl group having 1 to 3 carbon atoms.

The amount of the reactive silicone (a2) used is preferably within the range of 1 to 25% by mass, more preferably within the range of 3 to 20% by mass, and still more preferably within the range of 3.8 to 19% by mass based on the total mass of the raw materials forming the urethane resin (A), because higher wear resistance and higher hydrolysis resistance are obtained.

Examples of the polyisocyanate (a3) that can be used include: aromatic polyisocyanates such as phenylene diisocyanate, toluene diisocyanate, diphenylmethane diisocyanate, xylylene diisocyanate, naphthalene diisocyanate, polymethylene polyphenyl polyisocyanate, and carbodiimidated diphenylmethane polyisocyanate; and aliphatic polyisocyanates and alicyclic polyisocyanates such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, dimer acid diisocyanate, and norbornene diisocyanate. These polyisocyanates may be used alone or in combination of two or more. Of these, aliphatic polyisocyanates and/or alicyclic polyisocyanates are preferably used in terms of photo-discoloration resistance, and it is more preferable to use at least one polyisocyanate selected from the group consisting of hexamethylene diisocyanate, isophorone diisocyanate, and dicyclohexylmethane diisocyanate.

The amount of the polyisocyanate (a3) used is preferably within the range of 5 to 40% by mass, more preferably within the range of 7 to 30% by mass, and still more preferably within the range of 10 to 25% by mass based on the total mass of the raw materials forming the urethane resin (A), in terms of production stability and the mechanical properties of the coating to be obtained.

Example of the method for producing the urethane resin (A) include a method in which the polyol (a1), the raw material used to produce a urethane resin having a hydrophilic group, the reactive silicone (a2), the polyisocyanate (a3), and, if necessary, the chain extender (a1-1) are mixed at once and allowed to react. The reaction is performed, for example, at 50 to 100°C for 3 to 10 hours.

When the urethane resin (A) is produced, the ratio of the moles of the isocyanate groups included in the polyisocyanate (a3) to the total moles of the hydroxyl groups included in the polyol (a1), the hydroxyl and amino groups included in the chain extender (a1-1), functional groups that are reactive with isocyanate groups and included in the raw material used to produce the urethane resin having a hydrophilic group, and the functional groups that are reactive with isocyanate groups and included in the reactive silicone (a2) [the moles of the isocyanate groups / the total moles of the functional groups reactive with isocyanate groups] is preferably within the range of 0.8 to 1.2 and more preferably within the range of 0.9 to 1.1.

When the urethane resin (A) is produced, it is preferable to deactivate isocyanate groups remaining in the urethane resin (A). To deactivate these isocyanate groups, it is preferable to use an alcohol having one hydroxyl group such as methanol. The amount of the alcohol used is preferably within the range of 0.001 to 10 parts by mass based on 100 parts by mass of the urethane resin (A).

When the urethane resin (A) is produced, an organic solvent may be used. Examples of the organic solvent that can be used include ketone compounds such as acetone and methyl ethyl ketone; ether compounds such as tetrahydrofuran and dioxane; acetate compounds such as ethyl acetate and butyl acetate; nitrile compounds such as acetonitrile; and amide compounds such as dimethylformamide and N-methylpyrrolidone. These organic solvents may be used alone or in combination of two or more. It is preferable that the organic solvent is removed by, for example, a distillation method when the aqueous urethane resin composition is obtained.

Examples of the aqueous medium (B) that can be used include water, organic solvents miscible with water, and mixtures thereof. Examples of usable organic solvents miscible with water include alcohol solvents such as methanol, ethanol, n-propanol, and isopropanol; ketone solvents such as acetone and methyl ethyl ketone; polyalkylene glycol solvents such as ethylene glycol, diethylene glycol, and propylene glycol; polyalkylene glycol alkyl ether solvents; and lactam solvents such as N-methyl-2-pyrrolidone. These aqueous mediums may be used alone or in combination of two or more. Of these, it is preferable, in terms of safety and reduction in environmental load, to use only water or a mixture of water and an organic solvent miscible with water, and it is more preferable to use only water.

In terms of workability, the mass ratio of the urethane resin (A) to the aqueous medium (B) [(A)/(B)] is preferably within the range of 10/80 to 70/30 and more preferably within the range of 20/80 to 60/40.

The aqueous urethane resin composition of the present invention contains the urethane resin (A) and the aqueous medium (B) and may further contain an additional additive as needed.

Examples of the additional additive that can be used include an emulsifier, a neutralizer, a thickener, a urethanization catalyst, a cross-linking agent, a foaming agent, a pigment, a dye, an oil repellent, a hollow foam, a flame retardant, an antifoaming agent, a levelling agent, and an anti-blocking agent. These additives may be used alone or in combination of two or more.

The synthetic leather of the present invention will next be described.

The synthetic leather comprises a skin layer formed from the aqueous urethane resin composition of the present invention and/or a surface-treated layer formed from the aqueous urethane resin composition.

Examples of the synthetic leather include urethane-based synthetic leathers and polyvinyl chloride (PVC)-based synthetic leathers.

Examples of the urethane-based synthetic leather include a synthetic leather in which a fibrous substrate layer, an intermediate layer (bonding layer), a skin layer, and, if necessary, a surface-treated layer are stacked in a sequential manner.

Examples of the fibrous substrate that can be used include nonwoven fabrics, woven fabrics, and knitted fabrics. For example, polyester fibers, nylon fibers, acrylic fibers, acetate fibers, rayon fibers, polylactic acid fibers, cotton, hemp, silk, wool, and fiber mixtures thereof can be used as the material forming the fibrous substrate.

Examples of the intermediate layer (bonding layer) includes layers formed using known aqueous urethane resin compositions, known solvent-based urethane resin compositions, known solventless urethane resin compositions, etc.

When the aqueous urethane resin composition of the present invention is not used for the skin layer and the surface-treated layer, the skin layer and the surface-treated layer may be formed using a known aqueous urethane resin composition, a known solvent-based urethane resin composition, a known aqueous acrylic resin composition, a known solvent-based acrylic resin composition, etc. Of these, an aqueous urethane resin composition and/or an aqueous acrylic resin composition are preferably used in terms of reduction in environmental load.

Examples of the method for producing the urethane-based synthetic leather include a method including: applying a resin composition forming the surface-treated layer to a release paper liner; drying the applied resin composition; applying a resin composition forming the skin layer to the dried resin composition; drying the applied resin composition; applying a resin composition forming the intermediate layer (bonding layer) to the dried resin composition; drying the applied resin composition; and laminating the resulting layered body onto the fibrous substrate. To laminate them, pressure rollers heated to, for example, 80 to 140°C may be used as needed to perform thermocompression bonding at a pressure of, for example, 5 to 10 $MPa/m^2$. Then, if necessary, aging may be performed at a temperature of 20 to 60°C.

Examples of the method for applying the aqueous urethane resin composition of the present invention when the aqueous urethane resin composition is used to form the surface layer and/or the surface-treated layer include methods using a roll coater, a knife coater, a comma coater, an applicator, etc. The dry thickness of the aqueous urethane resin composition is, for example, within the range of 5 to 100 $\mu$m.

Examples of the method for drying the aqueous urethane resin composition of the present invention include a method in which the aqueous urethane resin composition is dried at a temperature of 60 to 130°C for 30 seconds to 10 minutes.

Examples of the PVC-based synthetic leather include a synthetic leather in which a fibrous substrate layer, a sponge layer, a PVC layer, and a surface-treated layer formed of the aqueous urethane resin composition of the present invention are stacked in a sequential manner. The layers other than the surface-treated layer are formed of known materials, and the method for forming the surface-treated layer may be the same as the method for forming the surface-treated layer in the urethane-based synthetic leather.

The above-described aqueous urethane resin composition of the present invention is excellent in wear resistance and hydrolysis resistance. Therefore, the aqueous urethane resin composition of the present invention can be preferably used for a skin layer and a surface-treated layer of a synthetic leather and can be preferably used for production of synthetic leathers that are required to have high wear resistance and high hydrolysis resistance and used for automobile interior materials, furnishings, sports shoes, etc. which are difficult to produce using conventional aqueous urethane resins as the substitutes.

[EXAMPLES]

The present invention will next be described in more detail by way of Examples.

[EXAMPLE 1] Preparation of aqueous urethane resin composition (X-1)

A four-neck flask equipped with a stirrer, a reflux condenser tube, a thermometer, and a nitrogen introduction tube was charged, under a nitrogen flow, with 500 parts by mass of a polycarbonate diol (hereinafter abbreviated as

"PC-1," "ETERNACOLL UH-200" manufactured by Ube Industries, Ltd., number average molecular weight: 2,000), 125 parts by mass of a both-end diol-terminated reactive silicone (hereinafter abbreviated as "both-end diol-terminated Si-1," "Silaplane FM-4425" manufactured by JNC Corporation, number average molecular weight: 10,000), 25 parts by mass of dimethylolpropionic acid (hereinafter abbreviated as "DMPA"), and 360 parts by mass of methyl ethyl ketone, and the mixture was stirred until uniform. Then 177 parts by mass of dicyclohexylmethane diisocyanate (hereinafter abbreviated as "$H_{12}$MDI") was added, and 0.1 parts by mass of dibutyltin dilaurate was added. The resulting mixture was allowed to react at 70°C for about 4 hours to thereby obtain a methyl ethyl ketone solution of a urethane prepolymer having isocyanate groups at molecular ends. Then 19 parts by mass of triethylamine was added to the obtained methyl ethyl ketone solution of the urethane prepolymer to neutralize carboxyl groups in the urethane prepolymer, and 1,960 parts by mass of ion exchanged water was added. Then 14 parts by mass of ethylenediamine (hereinafter abbreviated as "EDA") was added, and the resulting mixture was allowed to react. After completion of the reaction, methyl ethyl ketone was removed by evaporation under reduced pressure, whereby an aqueous urethane resin composition (X-1) (non-volatile content: 30% by mass, acid value: 13 KOH mg/g) was obtained.

[EXAMPLE 2] Preparation of aqueous urethane resin composition (X-2)

A four-neck flask equipped with a stirrer, a reflux condenser tube, a thermometer, and a nitrogen introduction tube was charged, under a nitrogen flow, with a polycarbonate diol (hereinafter abbreviated as "PC-2," "DURANOL T5652" manufactured by Asahi Kasei Chemicals Corporation, number average molecular weight: 2,000), 26 parts by mass of a one-end diol-terminated reactive silicone (hereinafter abbreviated as "one-end diol-terminated Si-1," "X-22-176GX-A" manufactured by Shin-Etsu Chemical Co., Ltd., number average molecular weight: 14,000), 8 parts by mass of DMPA, and 269 parts by mass of methyl ethyl ketone, and the mixture was stirred until uniform. Then 86 parts by mass of isophorone diisocyanate (hereinafter abbreviated as "IPDI"), and 0.1 parts by mass of dibutyltin dilaurate was added. The resulting mixture was allowed to react at 70°C for about 4 hours to thereby obtain a methyl ethyl ketone solution of a urethane prepolymer having isocyanate groups at molecular ends. Then 6 parts by mass of triethylamine was added to the obtained methyl ethyl ketone solution of the urethane prepolymer to neutralize carboxyl groups in the urethane prepolymer, and 1,463 parts by mass of ion exchanged water was added. Then 7 parts by mass of piperazine (hereinafter abbreviated as "PZ") was added, and the resulting mixture was allowed to react. After completion of the reaction, methyl ethyl ketone was removed by evaporation under reduced pressure, whereby an aqueous urethane resin composition (X-2) (non-volatile content: 30% by mass, acid value: 5 KOH mg/g) was obtained.

[EXAMPLE 3] Preparation of aqueous urethane resin composition (X-3)

A four-neck flask equipped with a stirrer, a reflux condenser tube, a thermometer, and a nitrogen introduction tube was charged, under a nitrogen flow, with 500 parts by mass of a polycarbonate diol (hereinafter abbreviated as "PC-3," "DURANOL T4692 manufactured by Asahi Kasei Chemicals Corporation, number average molecular weight: 2,000), 88 parts by mass of a one-end diol-terminated reactive silicone (hereinafter abbreviated as "one-end diol-terminated Si-2," "Silaplane FM-DA21" manufactured by JNC Corporation, number average molecular weight: 5,000), 26 parts by mass of DMPA, and 332 parts by mass of methyl ethyl ketone, and the mixture was stirred until uniform. Then 145 parts by mass of $H_{12}$MDI was added, and 0.1 parts by mass of dibutyltin dilaurate was added. The resulting mixture was allowed to react at 70°C for about 4 hours to thereby obtain a methyl ethyl ketone solution of a urethane prepolymer having isocyanate groups at molecular ends. Then 20 parts by mass of triethylamine was added to the obtained methyl ethyl ketone solution of the urethane prepolymer to neutralize carboxyl groups in the urethane prepolymer, and 1,808 parts by mass of ion exchanged water was added. Then 16 parts by mass of isophoronediamine (hereinafter abbreviated as "IPDA") was added, and the resulting mixture was allowed to react. After completion of the reaction, methyl ethyl ketone was removed by evaporation under reduced pressure, whereby an aqueous urethane resin composition (X-3) (non-volatile content: 30% by mass, acid value: 14 KOH mg/g) was obtained.

[EXAMPLE 4] Preparation of aqueous urethane resin composition (X-4)

A four-neck flask equipped with a stirrer, a reflux condenser tube, a thermometer, and a nitrogen introduction tube was charged, under a nitrogen flow, with 500 parts by mass of PC-2, 133 parts by mass of polytetramethylene glycol (hereinafter abbreviated as "PTMF1000," number average molecular weight: 1,000), 33 parts by mass of a one-end diol-terminated reactive silicone (hereinafter abbreviated as "one-end diol-terminated Si-3," "X-22-176F" manufactured by Shin-Etsu Chemical Co., Ltd., number average molecular weight: 12,000), 17 parts by mass of DMPA, and 385 parts by mass of methyl ethyl ketone, and the mixture was stirred until uniform. Then 86 parts by mass of IPDI was added, and 0.1 parts by mass of dibutyltin dilaurate was added. The resulting mixture was allowed to react at 70°C for about 4 hours to thereby obtain a methyl ethyl ketone solution of a urethane prepolymer having isocyanate groups at

molecular ends. Then 13 parts by mass of triethylamine was added to the obtained methyl ethyl ketone solution of the urethane prepolymer to neutralize carboxyl groups in the urethane prepolymer, and 2,098 parts by mass of ion exchanged water was added. Then 15 parts by mass of EDA was added, and the resulting mixture was allowed to react. After completion of the reaction, methyl ethyl ketone was removed by evaporation under reduced pressure, whereby an aqueous urethane resin composition (X-4) (non-volatile content: 30% by mass, acid value: 8 KOH mg/g) was obtained.

[EXAMPLE 5] Preparation of aqueous urethane resin composition (X-5)

A four-neck flask equipped with a stirrer, a reflux condenser tube, a thermometer, and a nitrogen introduction tube was charged, under a nitrogen flow, with 500 parts by mass of a polycarbonate diol (hereinafter abbreviated as "PC-4," "DURANOL G3452" manufactured by Asahi Kasei Chemicals Corporation, number average molecular weight: 1,000), 56 parts by mass of a one-end monol-terminated reactive silicone (hereinafter abbreviated as "one-end monol-terminated Si-1," "Silaplane FM-0425" manufactured by JNC Corporation, number average molecular weight: 10,000), 17 parts by mass of DMPA, and 291 parts by mass of methyl ethyl ketone, and the mixture was stirred until uniform. Then 86 parts by mass of hexanemethylene diisocyanate (hereinafter abbreviated as "HDI") was added, and 0.1 parts by mass of dibutyltin dilaurate was added. The resulting mixture was allowed to react at 70°C for about 4 hours to thereby obtain a methyl ethyl ketone solution of a urethane prepolymer having isocyanate groups at molecular ends. Then 13 parts by mass of triethylamine was added to the obtained methyl ethyl ketone solution of the urethane prepolymer to neutralize carboxyl groups in the urethane prepolymer, and 1,586 parts by mass of ion exchanged water was added. Then 22 parts by mass of IPDA was added, and the resulting mixture was allowed to react. After completion of the reaction, methyl ethyl ketone was removed by evaporation under reduced pressure, whereby an aqueous urethane resin composition (X-5) (non-volatile content: 30% by mass, acid value: 10 KOH mg/g) was obtained.

[EXAMPLE 6] Preparation of aqueous urethane resin composition (X-6)

A four-neck flask equipped with a stirrer, a reflux condenser tube, a thermometer, and a nitrogen introduction tube was charged, under a nitrogen flow, with 500 parts by mass of PC-1, 125 parts by mass of a both-end diamine-terminated reactive silicone (hereinafter abbreviated as "both-end diamine-terminated Si-1," "Silaplane FM-3325" manufactured by JNC Corporation, number average molecular weight: 10,000), 25 parts by mass of DMPA, and 362 parts by mass of methyl ethyl ketone, and the mixture was stirred until uniform. Then 165 parts by mass of $H_{12}$MDI was added, and 0.1 parts by mass of dibutyltin dilaurate was added. The resulting mixture was allowed to react at 70°C for about 4 hours to thereby obtain a methyl ethyl ketone solution of a urethane prepolymer having isocyanate groups at molecular ends. Then 19 parts by mass of triethylamine was added to the obtained methyl ethyl ketone solution of the urethane prepolymer to neutralize carboxyl groups in the urethane prepolymer, and 1,972 parts by mass of ion exchanged water was added. Then 31 parts by mass of IPDA was added, and the resulting mixture was allowed to react. After completion of the reaction, methyl ethyl ketone was removed by evaporation under reduced pressure, whereby an aqueous urethane resin composition (X-6) (non-volatile content: 30% by mass, acid value: 12 KOH mg/g) was obtained.

[EXAMPLE 7] Preparation of aqueous urethane resin composition (X-7)

A four-neck flask equipped with a stirrer, a reflux condenser tube, a thermometer, and a nitrogen introduction tube was charged, under a nitrogen flow, with 500 parts by mass of polytetramethylene glycol (hereinafter abbreviated as "PTMG2000," number average molecular weight: 2,000), 167 parts by mass of one-end diol-terminated Si-2, 23 parts by mass of DMPA, and 400 parts by mass of methyl ethyl ketone, and the mixture was stirred until uniform. Then 203 parts by mass of IPDI was added, and 0.1 parts by mass of dibutyltin dilaurate was added. The resulting mixture was allowed to react at 70°C for about 4 hours to thereby obtain a methyl ethyl ketone solution of a urethane prepolymer having isocyanate groups at molecular ends. Then 18 parts by mass of triethylamine was added to the obtained methyl ethyl ketone solution of the urethane prepolymer to neutralize carboxyl groups in the urethane prepolymer, and 2,176 parts by mass of ion exchanged water was added. Then 39 parts by mass of PZ was added, and the resulting mixture was allowed to react. After completion of the reaction, methyl ethyl ketone was removed by evaporation under reduced pressure, whereby an aqueous urethane resin composition (X-7) (non-volatile content: 30% by mass, acid value: 11 KOH mg/g) was obtained.

[COMPARATIVE EXAMPLE 1] Preparation of aqueous urethane resin composition (X'-1)

A four-neck flask equipped with a stirrer, a reflux condenser tube, a thermometer, and a nitrogen introduction tube was charged with 500 parts by mass of PC-1, 125 parts by mass of a both-end diol-terminated reactive silicone (hereinafter abbreviated as "both-end diol-terminated Si'-1," "KF-6002 manufactured by Shin-Etsu Chemical Co., Ltd.,

number average molecular weight: 3,200), 25 parts by mass of DMPA, and 360 parts by mass of methyl ethyl ketone, and the mixture was stirred until uniform. Then 177 parts by mass of $H_{12}$MDI was added, and 0.1 parts by mass of dibutyltin dilaurate was added. The resulting mixture was allowed to react at 70°C for about 4 hours to thereby obtain a methyl ethyl ketone solution of a urethane prepolymer having isocyanate groups at molecular ends. Then 19 parts by mass of triethylamine was added to the obtained methyl ethyl ketone solution of the urethane prepolymer to neutralize carboxyl groups in the urethane prepolymer, and 1,986 parts by mass of ion exchanged water was added. Then 14 parts by mass of EDA was added, and the resulting mixture was allowed to react. After completion of the reaction, methyl ethyl ketone was removed by evaporation under reduced pressure, whereby an aqueous polyurethane resin composition (X'-1) (non-volatile content: 30% by mass, acid value: 13 KOH mg/g) was obtained.

[COMPARATIVE EXAMPLE 2] Preparation of aqueous urethane resin composition (X'-2)

A four-neck flask equipped with a stirrer, a reflux condenser tube, a thermometer, and a nitrogen introduction tube was charged, under a nitrogen flow, with 500 parts by mass of PC-3, 88 parts by mass of a one-end diol-terminated reactive silicone (hereinafter abbreviated as "one-end diol-terminated Si'-1," "Silaplane FM-DA11" manufactured by JNC, number average molecular weight: 1,000), 26 parts by mass of DMPA, and 343 parts by mass of methyl ethyl ketone, and the mixture was stirred until uniform. Then 167 parts by mass of $H_{12}$MDI was added, and 0.1 parts by mass of dibutyltin dilaurate was added. The resulting mixture was allowed to react at 70°C for about 4 hours to thereby obtain a methyl ethyl ketone solution of a urethane prepolymer having isocyanate groups at molecular ends. Then 20 parts by mass of triethylamine was added to the obtained methyl ethyl ketone solution of the urethane prepolymer to neutralize carboxyl groups in the urethane prepolymer, and 1,865 parts by mass of ion exchanged water was added. Then 18 parts by mass of IPDA was added, and the resulting mixture was allowed to react. After completion of the reaction, methyl ethyl ketone was removed by evaporation under reduced pressure, whereby an aqueous urethane resin composition (X'-2) (non-volatile content: 30% by mass, acid value: 14 KOH mg/g) was obtained.

[Method for measuring acid value of urethane resin (A)]

The aqueous urethane resin compositions obtained in the Examples and Comparative Examples were dried, and 0.05 g to 0.5 g of the particles of one of the dried and solidified resins were weighed into an Erlenmeyer flask. Then about 80 mL of a solvent mixture of tetrahydrofuran and ion exchanged water at a mass ratio [tetrahydrofuran/ion exchanged water] of 80/20 was added, and a solution mixture was thereby obtained.

Next, a phenolphthalein indicator was mixed into the solution mixture, and the resulting mixture was titrated with a 0.1 mol/L aqueous potassium hydroxide solution standardized in advance. The acid value (mg KOH/g) of the aqueous urethane resin (A) was determined from the following computational formula (1) using the amount of the aqueous potassium hydroxide solution used for the titration.

$$\text{Computational formula} \quad A = (B \times f \times 5.611)/S \qquad (1)$$

In formula (1), A is the acid value (mg KOH/g) of the solid content of the resin, B is the amount (mL) of the 0.1 mol/L aqueous potassium hydroxide solution used for the titration, f is the factor of the 0.1 mol/L aqueous potassium hydroxide solution, S is the mass (g) of the resin particles, and 5.611 is the formula weight of potassium hydroxide (56.11/10).

[Method for producing synthetic leather]

100 Parts by mass of one of the aqueous urethane resin compositions obtained in the Examples and Comparative Examples, 10 parts by mass of a water-dispersible black pigment ("DILAC HS-9530" manufactured by DIC Corporation), and 1 part by mass of an associative thickener ("HYDRAN ASSISTER T10" manufactured by DIC Corporation) were mixed, and the mixture was applied to a release paper liner to a dry thickness of 30 μm and dried at 70°C for 2 minutes to thereby obtain a skin layer.

Next, 100 parts by mass of an aqueous urethane adhesive ("HYDRAN WLA-412" manufactured by DIC Corporation), 1 part by mass of an associative thickener ("HYDRAN ASSISTER T10" manufactured by DIC Corporation), and 9 parts by mass of a polyisocyanate cross-linking agent ("HYDRAN ASSISTER C5" manufactured by DIC Corporation) were mixed, and the mixture was applied to the skin layer to a dry thickness of 50 μm and dried at 70°C for 3 minutes. Immediately after the mixture was dried, a T/R raised fabric was laminated, and the resulting laminate was subjected to heat treatment at 120°C for 2 minutes and then aged at 50°C for 2 days. Then the release paper liner was peeled off, and a synthetic leather was thereby obtained.

[Method for evaluating wear resistance]

The synthetic leather obtained was subjected to a plane abrasion test (JASO-M403-88B method, load: 1 kg, stroke: 140 mm). The number of times at which the surface of the synthetic leather was worn away and the base fabric was observable was measured, and the wear resistance was evaluated as follows.

"A": 30,000 or more
"B": 10,000 or more and less than 30,000
"C": less than 10,000

[Method for evaluating hydrolysis resistance]

The synthetic leather obtained was cured under the wet heat conditions of 70°C and a humidity of 95% for 5 weeks. Then a change in the appearance was checked, and the hydrolysis resistance was evaluated as follows.

"A": No change is observed in the appearance.
"B": A change in luster is observed in the appearance.
"C": A change in luster is observed in the appearance, and the leather is sticky.

[Table 1]

<table>
<tr><td colspan="3">Table 1</td><td>Example 1</td><td>Example 2</td><td>Example 3</td><td>Example 4</td><td>Example 5</td></tr>
<tr><td colspan="3">Aqueous urethane resin composition</td><td>(X-1)</td><td>(X-2)</td><td>(X-3)</td><td>(X-4)</td><td>(X-5)</td></tr>
<tr><td rowspan="7">Urethan resin (A)</td><td colspan="2">Polyol (a1)</td><td>PC-1</td><td>PC-2</td><td>PC-3</td><td>PTMG1000</td><td>PC-4</td></tr>
<tr><td colspan="2">Chain extender (a1-1)</td><td>EDA</td><td>PZ</td><td>IPDA</td><td>EDA</td><td>IPDA</td></tr>
<tr><td colspan="2">Raw material used to produce urethan resin having hydrophilic group</td><td>DMPA</td><td>DMPA</td><td>DMPA</td><td>DMPA</td><td>DMPA</td></tr>
<tr><td rowspan="2">Reactive silicone (a2)</td><td>Type</td><td>Both-end diol-terminated Si-1</td><td>One-end diol-terminated Si-1</td><td>One-end diol-terminated Si-2</td><td>One-end diol-terminated Si-3</td><td>One-end monol-terminated Si-1</td></tr>
<tr><td>Number average molecular weight</td><td>10,000</td><td>14,000</td><td>5,000</td><td>12,000</td><td>10,000</td></tr>
<tr><td colspan="2">Polyisocyanate (a3)</td><td>H12MDI</td><td>IPDI</td><td>H12MDI</td><td>IPDI</td><td>HDI</td></tr>
<tr><td colspan="2">Acid value (mgKOH / g)</td><td>13</td><td>5</td><td>14</td><td>8</td><td>10</td></tr>
<tr><td colspan="3">Aqueous medium (B)</td><td>Water</td><td>Water</td><td>Water</td><td>Water</td><td>Water</td></tr>
<tr><td colspan="3">Evaluation of wear resistance</td><td>B</td><td>A</td><td>A</td><td>A</td><td>A</td></tr>
<tr><td colspan="3">Evaluation of hydrolysis resistance</td><td>A</td><td>A</td><td>B</td><td>A</td><td>B</td></tr>
</table>

[Table 2]

| Table 2 | | | Example 6 | Example 7 | Comparative Example 1 | Comparative Example 2 |
|---|---|---|---|---|---|---|
| Aqueous urethane resin composition | | | (X-6) | (X-7) | (X'-1) | (X'-2) |
| Urethan resin (A) | Polyol (a1) | | PC-1 | PTMG2000 | PC-1 | PC-3 |
| | Chain extender (a1-1) | | IPDA | PZ | EDA | IPDA |
| | Raw material used to produce urethan resin having hydrophilic group | | DMPA | DMPA | DMPA | DMPA |
| | Reactive silicone (a2) | Type | Both-end diamine-terminated Si-1 | One-end diol-terminated Si-2 | Both-end diol-terminated Si'-1 | One-end diol-terminated Si'-1 |
| | | Number average molecular weight | 10,000 | 5,000 | 3,200 | 1,000 |
| | Polyisocyanate (a3) | | H12MDI | IPDI | H12MDI | H12MDI |
| | Acid value (mgKOH / g) | | 12 | 11 | 13 | 14 |
| Aqueous medium (B) | | | Water | Water | Water | Water |
| Evaluation of wear resistance | | | B | A | C | C |
| Evaluation of hydrolysis resistance | | | A | A | B | B |

As can be seen, in Examples 1 to 7 according to the present invention, excellent wear resistance and excellent hydrolysis resistance are obtained.

However, in each of Comparative Examples 1 and 2, the number average molecular weight of the reactive silicone used is lower than the range defined in the present invention, and the wear resistance is insufficient. Therefore, the wear resistance and the hydrolysis resistance cannot be achieved simultaneously.

**Claims**

1. An aqueous urethane resin composition comprising: a urethane resin (A) that is a reaction product of essential ingredients including a polyol (a1) selected from a polyether polyol and/or a polycarbonate polyol, a reactive silicone (a2) having a number average molecular weight of 4,000 or more and having a functional group reactive with an isocyanate group, a polyisocyanate (a3), and at least one chain extender selected from the group consisting of ethylenediamine, isophoronediamine, and piperazine; and an aqueous medium (B).

2. The aqueous urethane resin composition according to claim 1, wherein the amount of the reactive silicone (a2) used is within the range of 1 to 25% by mass based on the total mass of raw materials forming the urethane resin (A).

3. The aqueous urethane resin composition according to claim 1 or 2, wherein the urethane resin (A) is an anionic urethane resin having an acid value of 20 mg KOH/g or less.

4. A synthetic leather comprising a skin layer formed from the aqueous urethane resin composition according to any one of claims 1 to 3 and/or a surface-treated layer formed from the aqueous urethane resin composition according to any one of claims 1 to 3.

**Patentansprüche**

1. Wässrige Urethanharzzusammensetzung, umfassend: ein Urethanharz (A), das ein Reaktionsprodukt aus wesentlichen Bestandteilen ist, die ein Polyol (a1), ausgewählt aus einem Polyetherpolyol und/oder einem Polycarbonatpolyol, ein reaktives Silicon (a2) mit einem zahlengemittelten Molekulargewicht von 4000 oder mehr und mit einer funktionellen Gruppe, die mit einer Isocyanatgruppe reaktiv ist, ein Polyisocyanat (a3) und mindestens einen Kettenverlängerer, ausgewählt aus der Gruppe bestehend aus Ethylendiamin, Isophorondiamin und Piperazin, beinhalten; und ein wässriges Medium (B).

2. Wässrige Urethanharzzusammensetzung nach Anspruch 1, wobei die Menge des verwendeten reaktiven Silikons (a2) innerhalb des Bereichs von 1 bis 25 Massen-% liegt, bezogen auf die Gesamtmasse der das Urethanharz (A) bildenden Rohmaterialien.

3. Wässrige Urethanharzzusammensetzung nach Anspruch 1 oder 2, wobei das Urethanharz (A) ein anionisches Urethanharz mit einer Säurezahl von 20 mg KOH/g oder weniger ist.

4. Kunstleder, umfassend eine aus der wässrigen Urethanharzzusammensetzung nach einem der Ansprüche 1 bis 3 gebildete Hautschicht und/oder eine aus der wässrigen Urethanharzzusammensetzung nach einem der Ansprüche 1 bis 3 gebildete oberflächenbehandelte Schicht.

**Revendications**

1. Composition aqueuse de résine d'uréthane comprenant : une résine d'uréthane (A) qui est un produit de réaction d'ingrédients essentiels comprenant un polyol (a1) choisi parmi un polyéther polyol et/ou un polycarbonate polyol, une silicone réactive (a2) possédant un poids moléculaire moyen en nombre de 4 000 ou plus et possédant un groupe fonctionnel réactif avec un groupe d'isocyanate, un polyisocyanate (a3), et au moins un extenseur de chaînes choisi dans le groupe constitué par l'éthylènediamine, l'isophoronediamine et la pipérazine ; et un milieu aqueux (B).

2. Composition aqueuse de résine d'uréthane selon la revendication 1, la quantité de la silicone réactive (a2) utilisée étant dans la plage de 1 à 25 % en masse sur la base de la masse totale de matières premières formant la résine d'uréthane (A).

3. Composition aqueuse de résine d'uréthane selon la revendication 1 ou 2, la résine d'uréthane (A) étant une résine d'uréthane anionique possédant un indice d'acide de 20 mg de KOH/g ou moins.

4. Cuir synthétique comprenant une couche de peau formée à partir de la composition aqueuse de résine d'uréthane selon l'une quelconque des revendications 1 à 3 et/ou une couche traitée en surface formée à partir de la composition aqueuse de résine d'uréthane selon l'une quelconque des revendications 1 à 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007119749 A
- CN 104844778 A
- WO 2013096048 A1
- JP 2007092195 A
- EP 1739224 A1